# DEMANDE DE BREVET EUROPEEN

(11) **EP 2 316 706 A1**
(43) Date de publication de la demande: **04.05.2011**
(21) Numéro de dépôt: 10013886.6
(22) Date de dépôt: 22.10.2010
(51) Int. Cl.: B61D 23/02

(54) **Système et procédé de détection d'un quai et véhicule ferroviaire équipé d'un tel système**

(30) Priorité: 27.10.2009 FR 0905168
(71) Demandeur: FAIVELEY TRANSPORT, 93200 Saint Denis (FR)
(72) Inventeur: Bertou, Jean-Gabriel, 77100 Meaux (FR); Salles, Olivier, 35133 Lécousse (FR); Lemare, Jimmy, 37230 Fondettes (FR)
(74) Mandataire: Broydé, Marc

(57) **Abrégé**

L'invention concerne un système de détection (2) d'un quai (4) comportant :
- un capteur supérieur (7) générant un faisceau de détection supérieur (f1) dont la limite inférieure forme la limite supérieure d'une zone A dans laquelle on souhaite vérifier la présence d'un nez de quai (5) et apte à délivrer un premier signal de détection représentatif de la présence ou de l'absence de quai (4) dans ledit faisceau de détection supérieur (f1) ;
- un capteur inférieur (8) générant un faisceau de détection inférieur (f2) dont la limite inférieure forme la limite inférieure de ladite zone A et apte à délivrer un deuxième signal de détection représentatif de la présence ou de l'absence de quai d(4) ans ledit faisceau de détection inférieur (f2) ; et
- une unité de traitement du premier et du deuxième signal agencée pour émettre un signal de localisation du nez de quai (5) dans ladite zone A lorsque le premier signal est représentatif de l'absence de quai (4) et lorsque le deuxième signal est représentatif de la présence de quai (4).

L'invention concerne également un véhicule ferroviaire équipé d'un tel système de détection de quai et un procédé de détection de quai.

## Description

### DOMAINE TECHNIQUE DE L'INVENTION

L'invention concerne un système de détection d'un quai, un véhicule ferroviaire équipé d'un tel système de détection de quai et un procédé de détection d'un quai.

### ÉTAT DE LA TECHNIQUE

Les véhicules ferroviaires sont généralement équipés de dispositifs mobiles d'accès ou combles lacunes. Ces dispositifs, généralement placés en dessous des portes d'accès au véhicule, sont mobiles entre une position escamotée et une position dans laquelle ils s'étendent entre un quai et un seuil d'accès au véhicule afin de faciliter l'embarquement et le débarquement des voyageurs.

Afin de contrôler le déploiement des dispositifs d'accès en fonction des caractéristiques du quai auquel ils doivent être accostés, des systèmes permettant de détecter le quai sont connus.

De tels systèmes sont notamment décrits dans la demande de brevet français FR 2 846 100 et dans la demande de brevet internationale WO 98/58148.

La demande de brevet français FR 2 846 100 décrit un système de localisation d'un quai comportant deux récepteurs et un émetteur à ultrasons. L'émetteur et les récepteurs sont agencés de telle sorte que les ondes émises par l'émetteur atteignent à la fois la surface horizontale supérieure et la surface verticale latérale du quai et que les ondes réfléchies par la surface supérieure soient reçues par l'un des capteurs alors que les ondes réfléchies par la surface latérale sont reçues par l'autre capteur. Le système comporte en outre une unité de traitement du signal qui analyse le signal reçu par chaque récepteur afin de calculer l'inclinaison des surfaces, supérieure et latérale, et de déterminer leur position, et permet, par conséquent, de localiser le rebord ou nez de quai.

Toutefois, cette solution n'est pas pleinement satisfaisante. En effet, ce système nécessite des moyens de calcul relativement importants pour localiser le nez de quai. En outre, ce système de localisation est peu précis et peu fiable.

La demande de brevet internationale WO 98/58148 décrit un système de localisation comportant deux ensembles émetteur-récepteur à ultrasons dont les cônes de détection sont sensiblement orientés vers le nez du quai. Le système comporte un dispositif de traitement du signal qui calcule par triangulation la hauteur du quai et la distance transversale entre le quai et le véhicule ferroviaire. Toutefois, ce système est également peu précis et peu fiable et nécessite des moyens de calcul importants.

### OBJET DE L'INVENTION

L'invention vise à remédier à ces problèmes en proposant un système et un procédé de détection d'un quai permettant de vérifier la présence d'un nez de quai dans une zone qui soient fiables, robustes et ne nécessitent pas de moyens de calcul importants.

A cet effet, et selon un premier aspect, l'invention propose un système de détection d'un quai comportant :
- un capteur supérieur générant un faisceau de détection supérieur f1 dont la limite inférieure forme la limite supérieure d'une zone A dans laquelle on souhaite vérifier la présence d'un nez de quai et apte à délivrer un premier signal de détection représentatif de la présence ou de l'absence de quai dans ledit faisceau de détection supérieur f1 ;
- un capteur inférieur générant un faisceau de détection inférieur f2 dont la limite inférieure forme la limite inférieure de ladite zone A et apte à délivrer un deuxième signal de détection représentatif de la présence ou de l'absence de quai dans ledit faisceau de détection inférieur f2 ; et
- une unité de traitement du premier et du deuxième signal agencée pour émettre un signal de localisation du nez de quai dans ladite zone A lorsque le premier signal est représentatif de l'absence de quai et lorsque le deuxième signal est représentatif de la présence de quai.

Ainsi, ce système de localisation est fiable et simple puisque la présence du nez de quai dans la zone A peut être vérifiée aisément en fonction des signaux provenant du capteur supérieur et du capteur inférieur.

Avantageusement, le système comporte au moins un capteur délivrant un signal représentatif de la distance entre ledit capteur et l'obstacle le plus proche rencontré dans son faisceau de détection. Ainsi, en cas de présence du quai dans la zone A, le système de détection est en outre apte à déterminer la distance à combler entre le véhicule ferroviaire et le quai.

Dans un mode de réalisation, le capteur inférieur délivre un signal représentatif de la distance d2 entre ledit capteur inférieur et l'obstacle le plus proche rencontré dans le faisceau de détection inférieur f2 de sorte à déterminer la distance à combler.

Dans un autre mode de réalisation de l'invention, le système comporte un troisième capteur générant un troisième faisceau de détection f3 dont l'axe de propagation est sensiblement horizontal, orienté vers la zone A, et apte à délivrer un troisième signal de détection représentatif de la distance d3 entre ledit troisième capteur 9 et l'obstacle le plus proche rencontré dans le troisième faisceau de détection f3. Ce troisième capteur, présentant un faisceau de détection dont l'axe est sensiblement perpendiculaire à la paroi du quai, permet d'obtenir une mesure très précise de la distance à combler.

De préférence, l'axe de propagation du troisième faisceau de détection f3 suit sensiblement la limite inférieure de la zone A.

Avantageusement, l'unité de traitement comporte un comparateur traitant un signal représentatif d'une distance d2 ou d3 entre un capteur et obstacle le plus proche rencontré dans son faisceau de détection et comparant ladite distance avec un seuil d MAX, l'unité de traitement étant agencée pour émettre un signal de localisation du nez de quai dans ladite zone A lorsque ladite distance est inférieure au seuil d MAX. Cette comparaison permet de vérifier que le quai n'est pas située hors de portée du marchepied.

Dans un mode de réalisation, le capteur supérieur délivre un signal représentatif de la distance d1 entre ledit capteur supérieur et l'obstacle le plus proche rencontré dans le faisceau de détection supérieur f1 et le capteur inférieur délivre un signal représentatif de la distance d2 entre ledit capteur inférieur et l'obstacle le plus proche rencontré dans le faisceau de détection inférieur f2.

Dans ce cas, l'unité de traitement comporte un soustracteur traitant le premier et le deuxième signal de sorte à obtenir un signal représentatif de la différence Δ entre les distances d1 et d2, un premier comparateur traitant le signal représentatif de la différence Δ et comparant la différence Δ avec un seuil S, l'unité de traitement étant agencée pour valider que le premier signal est représentatif de l'absence de quai et émettre un signal de localisation du nez de quai dans ladite zone A lorsque la différence Δ est supérieure au seuil S. Ce mode de traitement est simple et ne nécessite pas de moyens de calcul importants. Il permet en outre de gérer des cas plus complexes en prenant en compte des obstacles situés à proximité du nez de quai et les dimensions des irrégularités de la paroi verticale du quai.

Dans un mode de réalisation, le système comporte un quatrième capteur-générant un quatrième faisceau de détection f4 orienté vers le bas et apte à délivrer un quatrième signal de détection représentatif de la présence ou de l'absence de quai dans ledit quatrième faisceau de détection f4.

Selon un deuxième aspect, l'invention concerne un véhicule ferroviaire comportant un dispositif mobile d'accès à un seuil du véhicule ferroviaire et au moins un système de détection d'un quai selon le premier aspect de l'invention.

De préférence, le dispositif mobile d'accès comporte une unité de commande connectée audit système de détection et agencée pour déployer le dispositif mobile d'accès lorsque l'unité de traitement du système de localisation émet un signal de localisation du nez de quai dans ladite zone A.

Avantageusement, l'unité de traitement du signal délivre à l'unité de commande du dispositif mobile d'accès un signal représentatif de la distance à combler entre le véhicule ferroviaire et le quai.

Selon un troisième aspect, l'invention concerne un procédé de détection d'un quai comportant les étapes suivantes :
- génération par un capteur supérieur d'un faisceau de détection supérieur f1 dont la limite inférieure forme la limite supérieure d'une zone A dans laquelle on souhaite vérifier la présence du nez de quai ;
- délivrance d'un premier signal de détection représentatif de la présence ou de l'absence de quai dans ledit faisceau de détection supérieur f1 ;
- génération par un capteur inférieur d'un faisceau de détection inférieur f2 dont la limite inférieure forme la limite inférieure de ladite zone A ;
- délivrance d'un deuxième signal de détection représentatif de la présence ou de l'absence de quai dans ledit faisceau de détection inférieur f2 ; et
- émission d'un signal de localisation du nez de quai dans ladite zone A lorsque le premier signal est représentatif de l'absence de quai et lorsque le deuxième signal est représentatif de la présence de quai.

Avantageusement, le procédé comporte l'émission d'un signal de localisation du nez de quai hors de ladite zone A lorsque le premier et le deuxième signal sont représentatifs de la présence d'un quai ou lorsque le premier et le deuxième signal sont représentatifs de l'absence de quai.

Le procédé comporte une étape de délivrance d'au moins un signal de détection représentatif de la distance entre un capteur et l'obstacle le plus proche rencontré dans son faisceau de détection.

Le procédé comporte une étape de comparaison de ladite distance entre un capteur et l'obstacle le plus proche rencontré dans son faisceau de détection avec un seuil d MAX.

Avantageusement, le premier signal de détection est représentatif de la distance d1 entre le capteur supérieur et l'obstacle le plus proche rencontré dans le faisceau de détection supérieur f1 et le deuxième signal de détection est représentatif de la distance d2 entre le capteur inférieur et l'obstacle le plus proche rencontré dans le faisceau de détection inférieur f2.

Le procédé comporte une étape de soustraction des distances d1 et d2 de sorte à obtenir un signal représentatif de la différence Δ entre les distances d1 et d2, une étape de comparaison de la différence Δ avec un seuil S et une étape d'émission d'un signal de localisation du nez de quai dans ladite zone A lorsque la différence Δ est supérieure au seuil S.

### BRÈVE DESCRIPTION DES FIGURES

D'autres objets et avantages de l'invention apparaîtront au cours de la description qui suit, faite en référence aux dessins annexés, dans lesquels :
- la figure 1 est une vue schématique d'un seuil d'accès à un véhicule ferroviaire équipé d'une porte, d'un dispositif mobile d'accès et de deux systèmes de détection selon un premier mode de réalisation de l'invention ;
- la figure 2 est une vue schématique en coupe transversale d'un quai et d'un véhicule ferroviaire équipé d'un dispositif mobile d'accès au seuil ;
- la figure 3 est une vue schématique, en coupe transversale, d'un véhicule ferroviaire illustrant une zone A de détection d'un quai dans laquelle on souhaite vérifier la présence d'un nez de quai pour autoriser la déploiement du dispositif mobile d'accès au seuil ;
- les figures 4a, 4b et 4c illustrent respectivement la position par rapport à ladite zone A des trois capteurs d'un système de détection de quai selon un mode de réalisation de l'invention ;
- la figure 5 illustre la zone A et les zones de tolérance bordant ladite zone A, introduites lorsque les capteurs génèrent des faisceaux de détection dont les contours sont flous ;
- les figures 6 a, 6b, 6c illustrent respectivement la position par rapport à la zone A et aux zones de tolérance, des trois capteurs d'un système de localisation selon un mode de réalisation de l'invention ;
- la figure 7 illustre un système de localisation selon un mode de réalisation de l'invention ;
- la figure 8 illustre la position d'un troisième capteur selon une variante de réalisation de l'invention ;
- la figure 9 illustre la position d'un quatrième capteur selon une variante de réalisation de l'invention ;
- la figure 10 est un schéma illustrant le circuit logique de traitement des signaux de détection ;
- la figure 11 illustre un cas particulier dans lequel le capteur supérieur détecte un bagage disposé sur le quai et le capteur inférieur détecte le quai ;
- les figures 12, 13, 14 et 15 illustrent des systèmes de localisation selon quatre modes de réalisation différents de l'invention ;
- la figure 16 illustre un cas particulier dans lequel le capteur supérieur ne détecte rien alors que le capteur inférieur détecte un obstacle;
- les figures 17 et 18 illustrant des quais présentant des configurations particulières.

### EXEMPLES DE RÉALISATION

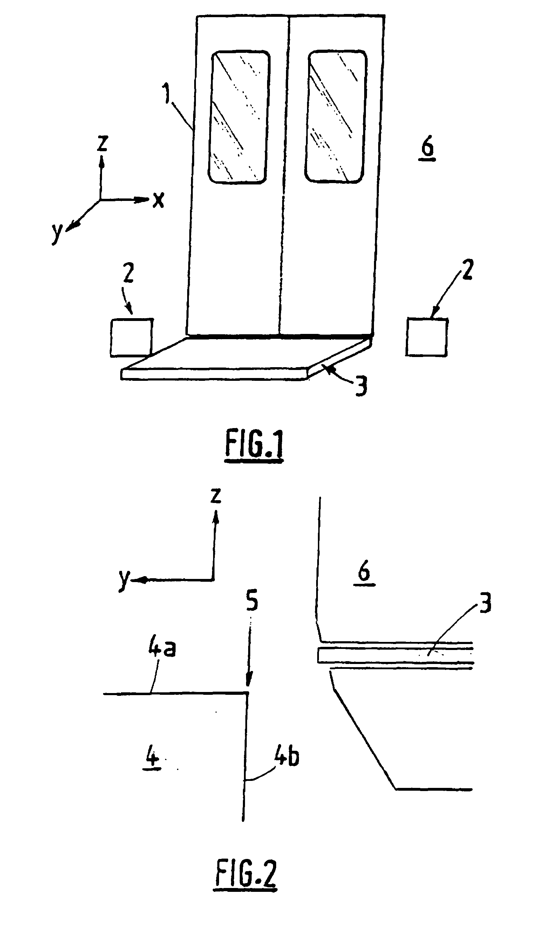

La figure 1 illustre un seuil d'accès à un véhicule ferroviaire 6. Le véhicule 6 comporte une porte d'accès 1, un dispositif mobile d'accès au seuil d'embarquement et de débarquement du véhicule 6 et au moins un système de détection 2 de quai 4.

Dans le mode de réalisation représenté, le dispositif mobile d'accès comporte un marchepied 3 comble lacune et une unité de commande dudit marchepied 3. Le marchepied 3 est mobile horizontalement selon un axe y transversal à la direction de déplacement du véhicule 6 et est destiné à combler la lacune entre le véhicule ferroviaire 6 et le quai 4. L'unité de commande est connectée au système de détection 2 de quai afin de commander le déploiement du marchepied 3 lorsque le quai 4 se trouve dans une position autorisant le déploiement dudit marchepied 3. Dans un mode de réalisation de l'invention, l'unité de commande est également apte à commander l'ampleur du déplacement du marchepied 3 selon l'axe y.

Le véhicule ferroviaire 6 peut comporter un seul système de détection 2 par seuil ou comporter deux système de détection 2 réparties de part et d'autre de la porte 1 comme cela est représenté sur la figure 1. Le système de détection 2 peut être solidarisé à la caisse du véhicule ferroviaire 6 ou être solidarisé partiellement ou intégralement au marchepied 3.

La figure 2 illustre un véhicule ferroviaire 6 à quai, en coupe transversale, au niveau d'un dispositif mobile d'accès au seuil.

Le quai 4 présente une paroi horizontale 4b de réception des voyageurs, une paroi verticale 4a et un nez de quai 5 correspondant à l'arête formée à l'intersection entre la paroi verticale 4a et la paroi horizontale 4b. Selon une variante de réalisation, les quais peuvent présenter une portion en saillie horizontale. Dans ce cas, le nez de quai 5 est, de la même façon, formé par l'arête à l'intersection entre la paroi horizontale et la paroi verticale de ladite portion en saillie.

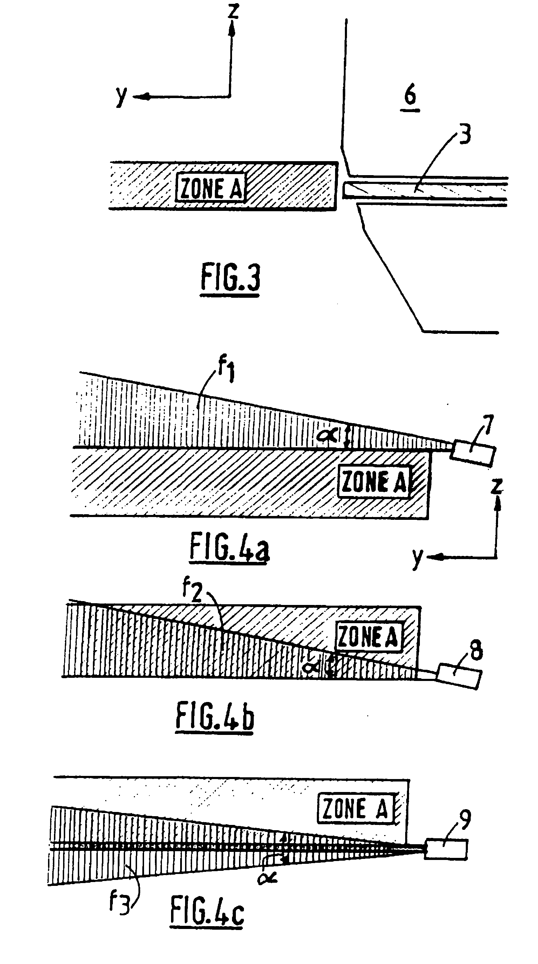

La figure 3 représente la zone A dans laquelle doit se situer le nez de quai 5 pour que le déploiement du marchepied 3 soit possible. Cette zone A est définie par une limite supérieure, une limite inférieure et une limite de fond de zone correspondant à la portée maximale du marchepied 3. Le déploiement du marchepied 3 ne présente bien évidemment un intérêt que lorsque l'extrémité du marchepied 3 vient se positionner à proximité du nez de quai 5.

Le système de localisation selon l'invention comporte au moins deux capteurs, à savoir un capteur supérieur 7 et un capteur inférieur 8.

Les capteurs selon l'invention pourront être constitués de tous types de moyens de détection aptes à générer un signal de détection lorsqu'un obstacle est placé dans leur faisceau de détection. À titre d'exemple, les capteurs pourront notamment être des capteurs infrarouges, à ultrasons, laser, des caméras, etc.

Le capteur supérieur 7, représenté sur la figure 4a, génère un faisceau de détection supérieur f1 dont la limite inférieure forme la limite supérieure de la zone A. Le capteur inférieur 9, représenté sur la figure 4b, génère un faisceau de détection inférieur f2 dont la limite inférieure forme la limite inférieure de la zone A.

Les capteurs, supérieur 7 et inférieur 8, sont donc orientés en fonction de leurs angles d'émission α. De manière générale, les limites inférieure et supérieure de la zone A sont sensiblement horizontales. Aussi, dans ce cas, si l'angle d'émission α des capteurs 7, 8 est de l'ordre de 60°, les capteurs sont alors orientés d'un angle d'environ 30° vers le haut, par rapport à l'horizontale.

Les capteurs, supérieur 7 et inférieur 8, sont aptes à générer un signal de détection représentatif de la présence ou de l'absence de quai dans leur faisceau de détection.

Le système de détection comporte également une unité de traitement du signal 11 recevant le premier signal de détection provenant du capteur supérieur 7 et le second signal de détection provenant du capteur inférieur 8. Avantageusement, selon l'invention, le traitement des signaux provenant des différents capteurs 7, 8 ne nécessite pas de moyens de calcul complexes et l'unité de traitement 11 peut donc être réalisé uniquement en électronique câblée.

Lorsque le premier et le second signal sont tous les deux représentatifs de la présence du quai 4, on peut en conclure que le nez de quai 5 est au-dessus de la zone A. Dans ce cas, l'unité de traitement 11 délivre un signal de localisation du nez de quai 5 hors de la zone A ou ne délivre tout simplement pas de signal de localisation du quai. De même, lorsque le premier et le second signal sont tous les deux représentatifs de l'absence de quai 4, on peut en conclure que le nez de quai 5 est au-dessous de la zone A. Aussi, l'unité de traitement 11 ne délivre pas de signal ou délivre un signal de localisation du nez de quai hors de la zone A. Par conséquent, dans ces deux cas, l'unité de traitement 11 ne délivre pas à l'unité de commande dudit marchepied 3 un signal de localisation du nez de quai dans la zone A de telle sorte que le déploiement du marchepied 3 n'est pas autorisé.

Lorsque le premier signal est représentatif de l'absence de quai 4 dans le faisceau de détection supérieur f1 et le second signal est représentatif de la présence du quai 4 dans le faisceau de détection inférieur f2, on peut en conclure que le nez de quai 5 se trouve dans ladite zone A. Dans ce cas, l'unité de traitement 11 délivre un signal de localisation du nez de quai 5 de la zone A à l'unité de commande du dispositif mobile d'accès de sorte à autoriser le déploiement du marchepied 3.

Avantageusement, selon l'invention, le système de détection comporte au moins un capteur qui délivre un signal de détection représentatif de la distance entre ledit capteur et le quai 4 afin de déterminer la distance à combler selon l'axe y, transversal à la direction de déplacement du véhicule ferroviaire 6, entre le véhicule ferroviaire 6 et le quai 4.

Pour ce faire, dans le mode de réalisation illustré sur la figure 4c, le système de localisation comporte un troisième capteur 9. Ce troisième capteur génère un troisième faisceau de détection f3 dont l'axe principal de propagation est sensiblement horizontal, orienté vers la zone A. En d'autres termes, l'axe principal du troisième faisceau de détection est parallèle à l'axe de déploiement du marchepied 3. Le troisième capteur 9 est apte à délivrer un troisième signal de détection représentatif de la distance d3 entre ledit troisième capteur 9 et l'obstacle le plus proche rencontré dans le troisième faisceau de détection f3. Le troisième capteur 9 a ainsi pour fonction de délivrer une mesure précise de la distance à combler entre le véhicule ferroviaire 6 et le quai 4. En effet, du fait de l'orientation du troisième capteur 9 qui délivre un faisceau f3 dont l'axe principal est sensiblement horizontal et par conséquent sensiblement perpendiculaire à la surface verticale 4b du quai 4, le troisième capteur 9 est apte à délivrer une mesure fiable et précise de la distance d3 à combler. De préférence, l'axe principal de propagation du troisième faisceau de détection f3 suit sensiblement la limite inférieure de la zone A de sorte à pouvoir mesurer une distance d3 pour tout quai 4 dont le nez 5 se situerait dans la zone A.

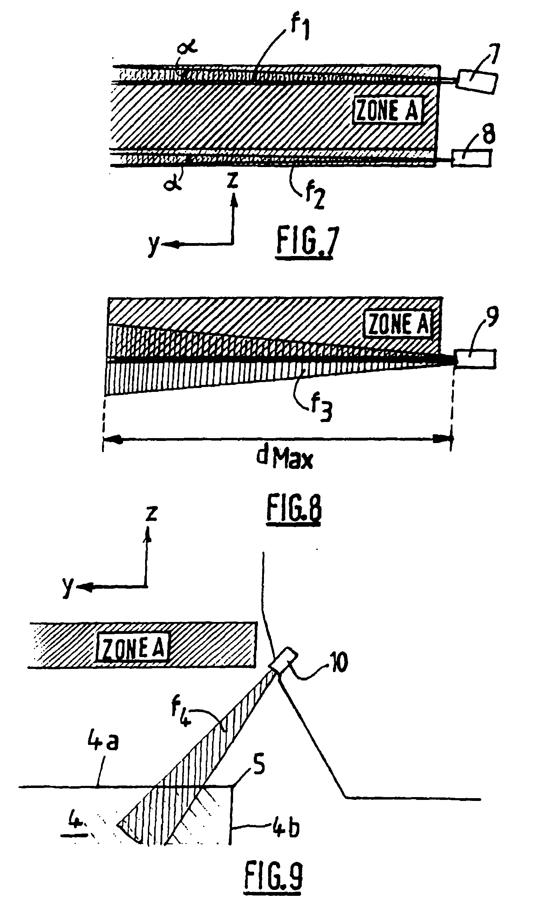

Dans un autre mode de réalisation illustré sur la figure 7, la distance à combler selon l'axe y est déterminée à partir d'un signal de détection délivré par le capteur inférieur 8 et représentatif de la distance d2 entre le capteur inférieur 8 et le quai 4. Dans ce mode de réalisation, le troisième capteur 9, décrit ci-dessus, n'est plus nécessaire. Ce mode de réalisation peut notamment être préféré pour des applications dans lesquelles la précision de la mesure de distance à combler peut être négligée et/ou lorsque le capteur inférieur émet un faisceau de détection unidirectionnel ou présentant un faible angle d'émission α. En effet, afin de délivrer une mesure précise de la distance à combler, le capteur inférieur 8 doit à la fois délivrer un faisceau de détection dont la limite inférieure s'étend de préférence sensiblement horizontalement afin de former la limite inférieure de ladite zone A et dont l'axe principal de propagation est sensiblement horizontal. Or, ces conditions ne peuvent être strictement réunies que lorsque le capteur présente un angle d'émission négligeable.

À titre d'exemple, les capteurs 7, 8 représentés sur la figure 7 sont des faisceaux coniques présentant un angle de cône α faible, de l'ordre de 1 à 4°. Ces capteurs 7, 8 sont par exemple des capteurs infra rouge.

Le système de détection selon l'invention permet donc, d'une part, de déterminer si le nez de quai 5 est situé dans la zone A en fonction du premier et du second signal provenant du capteur supérieur 7 et du capteur inférieur 8 et d'autre part de déterminer la distance à combler selon l'axe y, transversal à la direction de déplacement du véhicule ferroviaire 6, entre le véhicule ferroviaire 6 et le quai 4.

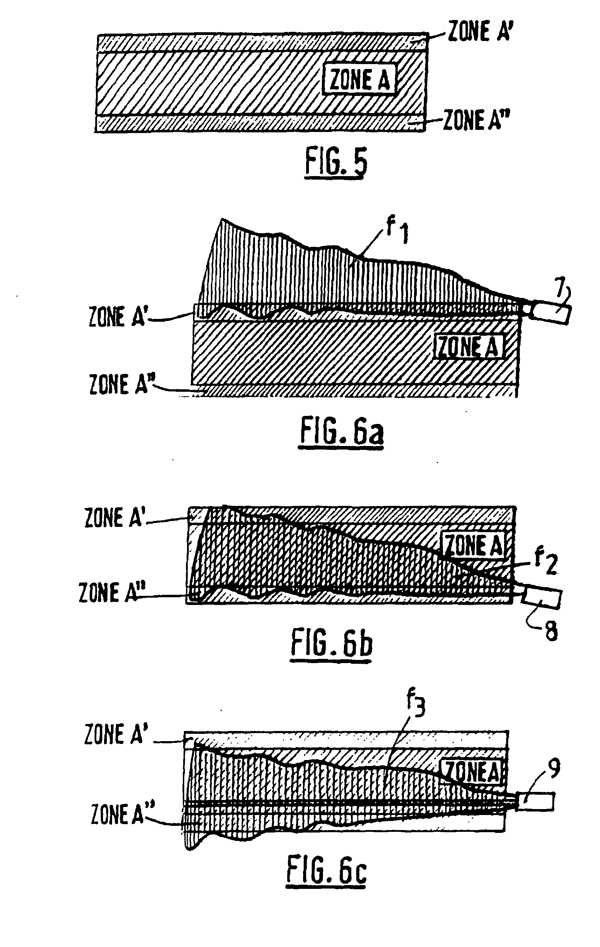

Les figures 5, 6a, 6b et 6c illustrent la gestion de l'utilisation de capteurs présentant des limites accidentées ou floues en introduisant de zones de tolérance. Lorsque les capteurs 7, 8 et 9 délivrent des faisceaux de détection aux limites floues ou accidentées, il est nécessaire d'introduire aux limites de la zone A, une zone de tolérance supérieure : la zone A', et une zone de tolérance inférieure : la zone A". Dans ces zones A' et A" de tolérance, le nez de quai peut être déclaré dans ou en dehors de la zone A.

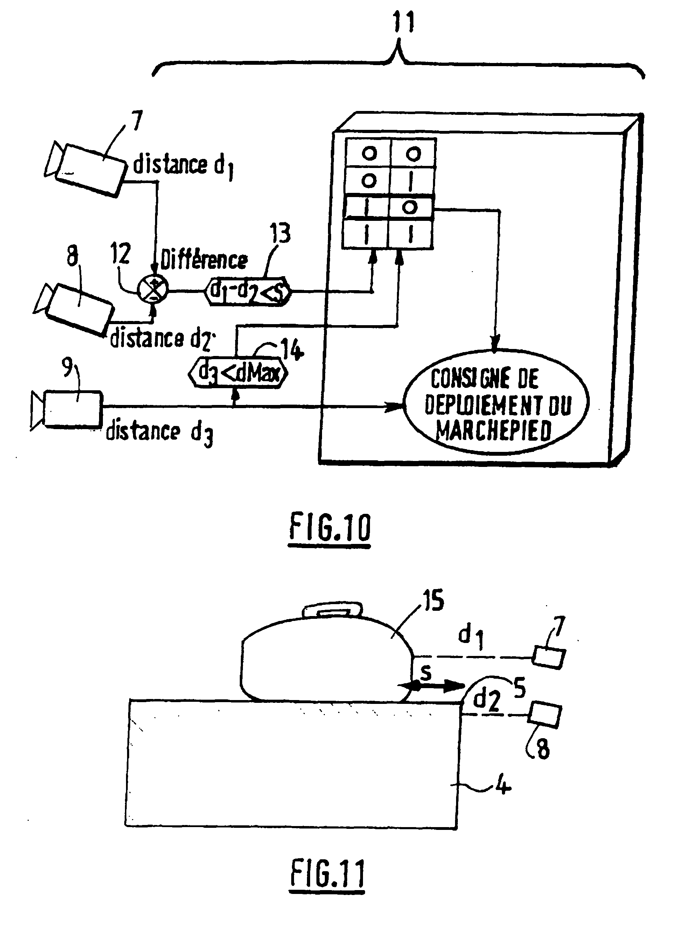

La figure 10 illustre le fonctionnement d'une unité de traitement 11 selon un mode de réalisation de l'invention.

Dans ce mode de réalisation avantageux, les capteurs, supérieur 7 et inférieur 8, délivrent un signal représentatif d'une distance avec un obstacle rencontré. Ainsi, le capteur supérieur 7 délivre un signal représentatif de la distance d1 entre ledit capteur supérieur 7 et l'obstacle le plus proche rencontré dans le faisceau de détection supérieur f1 et le capteur inférieur 8 délivre un signal représentatif de la distance d2 entre ledit capteur inférieur 8 et l'obstacle le plus proche rencontré dans le faisceau de détection inférieur f2.

Par ailleurs, l'unité de traitement 11 comporte un soustracteur 12 et un comparateur 13. Le soustracteur 12 traite le premier et le deuxième signal de sorte à obtenir un signal représentatif de la différence Δ entre les distances d1 et d2 avec Δ = d1 - d2. Ledit signal représentatif de cette différence Δ est ensuite traité par le comparateur 13 qui compare la différence relative Δ avec un seuil S.

Par ailleurs, l'unité de traitement 11 comporte un second comparateur 14 qui compare la distance d3 obtenue par le troisième capteur 9 à un seuil de proximité maximum d MAX correspondant à la portée maximum du marchepied 3. Ce fonctionnement correspond aux modes de réalisation des figures 4a, 4b, 4c, 6a, 6b et 6c.

Dans l'autre mode de réalisation représenté sur la figure 7, le second comparateur 13 compare la distance d2 obtenue par le capteur inférieure 8 audit seuil de proximité maximum d MAX.

Au moyen des éléments mentionnés ci-dessus, l'unité de traitement 11 est apte à déterminer si le nez de quai 5 est présent dans la zone A et à déterminer la distance à combler selon l'axe y, transversal à la direction de déplacement du véhicule ferroviaire 6, entre la véhicule ferroviaire 6 et le quai 4.

Lorsque le nez de quai 5 se situe au-dessus de la zone A, les capteurs, supérieur 7 et inférieur 8, détectent le quai et délivrent des signaux représentatif des distances d1 et d2. Dans ce cas, les distances d1 et d2 sont sensiblement identiques et la différence Δ = d1 - d2 est donc inférieure au seuil S. Dans ce cas, le comparateur envoie un signal « 0 »correspondant à un signal de localisation du nez de quai hors de la zone A. Le système de détection communique donc à l'unité de commande du marchepied 3 un signal de localisation du nez de quai hors de la zone A de telle sorte que le déploiement du marchepied 3 ne soit pas autorisé.

Lorsque le nez de quai 5 se situe dans la zone A, le capteur supérieur 7 ne détecte pas de quai 4 et renvoie par exemple un signal qui correspond à une distance de détection infinie. En pratique, les capteurs délivrent généralement dans ce cas un signal représentatif de leur distance maximale de détection. Aussi, la distance d1 est largement supérieure à la distance d2 et la différence Δ = d1 - d2 est donc supérieure au seuil S. Dans ce cas, le premier comparateur 13 envoie un signal 1 correspondant à un signal de localisation du nez de quai 5 dans la zone A. En outre, dans ce cas, le second comparateur 14 vérifie que la distance d2 ou d3 est inférieure à un seuil de proximité d MAX. Si la distance d2 ou d3 est inférieure à d MAX, le second comparateur 14 délivre un signal « 0 » indiquant que le nez de quai 5 se situe dans la zone A et ne se situe donc pas hors de portée du marchepied 3. Au contraire si la distance d2 ou d3 est supérieure à d MAX, le second comparateur 14 délivre un signal « 1 » indiquant que le quai 4 se situe hors de la zone A et donc hors de portée du marchepied 3.

Lorsque le premier comparateur 13 délivre un signal « 1 » et le second comparateur 14 un signaL « 0 », l'unité de traitement délivre un signal de localisation du nez de quai dans la zone A et la distance d2 ou d3 est également communiqué au dispositif de commande du marchepied 3 de sorte à définir la consigne d'amplitude de déplacement dudit marchepied 3.

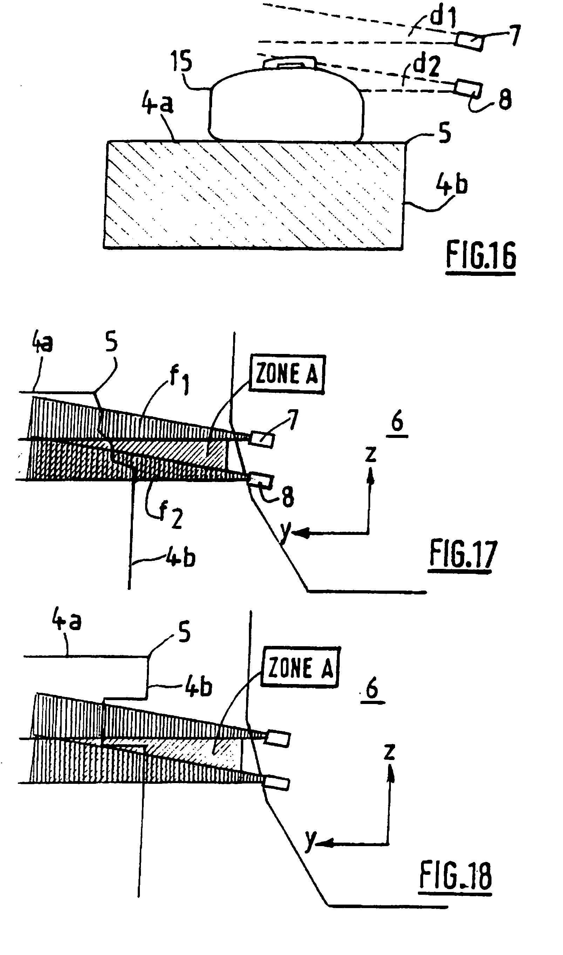

La comparaison de la différence Δ avec le seuil S permet en outre de traiter les problèmes liés à des irrégularités de la paroi verticale 4b du quai 4 telles que représenté sur les figures 17 et 18 ou aux obstacles présents sur le quai 4, à proximité du nez de quai 5 tel que représenté sur la figure 11.

Ainsi, lorsque le nez de quai 5 se situe au-dessus de la zone A et que la surface verticale 4b présente des irrégularités au niveau de la zone A (voir figures 17 et 18), la différence Δ = d1 - d2 est inférieure au seuil S. Ainsi, l'unité de traitement ne délivre donc pas de signal de localisation du nez de quai dans la zone A, mais un signal de localisation du quai 4 hors de la zone A de telle sorte que le marchepied 3 n'est pas autorisé à être déployé.

Par ailleurs, lorsqu'un obstacle 15 tel qu'un bagage se trouve à proximité d'un nez de quai 5 se situant dans la zone A (voir figure 11), le capteur supérieur 7 délivre un signal représentatif de la distance d1 entre ledit capteur supérieur 7 et l'obstacle 15 et le capteur inférieur 8 délivre un signal représentatif de la distance d2 entre le capteur inférieur 8 et le quai 4. Lorsque l'obstacle 15 se trouve près du nez de quai 5, la différence Δ = d1 - d2 est inférieure au seuil S et l'unité de traitement ne délivre donc pas de signal de localisation du nez de quai dans la zone A. Ainsi, le marchepied 3 n'est pas autorisé à être déployé alors qu'un obstacle 15 pourrait gêner le déploiement du marchepied 3 ou mettre en cause la sécurité des passagers.

Au contraire, lorsque l'obstacle 15 se trouve suffisamment loin du nez de quai 5, la différence Δ = d1 - d2 est supérieure au seuil S et l'unité de traitement délivre donc un signal de localisation du nez de quai 5 dans la zone A de telle sorte que le marchepied 3 peut être déployé.

Lorsque le nez de quai 5 se situe en dessous de la zone A, les capteurs supérieur 7 et inférieur 8 ne détectent pas d'obstacles. Dans ce cas, la différence Δ = d1 - d2 est nulle et donc inférieure à S et/ou la distance d2 ou d3 est supérieur à d MAX. Dans ce cas, l'unité de traitement délivre donc un signal de localisation du nez de quai 5 en dehors de la zone A.

On note toutefois que dans certains cas particuliers, il est nécessaire de disposer d'au moins deux systèmes de détection selon l'invention réparties le long du véhicule. En effet, un seul système de détection ne permet de déceler le cas illustré sur la figure 16 dans lequel le nez de quai est disposé en dessous de la figure 4 et un obstacle 15 est disposé sur le quai 4 de telle sorte que le capteur inférieur 8 détecte le bagage 15 alors que le capteur supérieur 7 ne détecte pas d'obstacle. Aussi, de manière avantageuse, pour permettre de différencier ce cas particulier du cas dans lequel le nez de quai 5 se trouve dans la zone A, le véhicule ferroviaire 6 comporte au moins deux systèmes de détection communiquant leurs signaux de détection à une unité de traitement du signal commune qui compare les signaux provenant des deux système de détection afin de confirmer ou infirmer la présence d'un nez de quai 5 dans la zone A.

Selon un mode de réalisation de l'invention, le système de localisation comporte également un quatrième capteur 10 générant un quatrième faisceau de détection f4 orienté vers le bas et apte à délivrer un quatrième signal de détection représentatif de la présence ou de l'absence de quai 4 dans ledit quatrième faisceau de détection f4. Ce quatrième signal de détection permet de déterminer si un quai 4 bas est présent. Cette information peut notamment être utilisée pour autoriser ou interdire l'ouverture des portes ou bien pour autoriser ou interdire le déploiement d'une seconde marche mobile située plus bas.

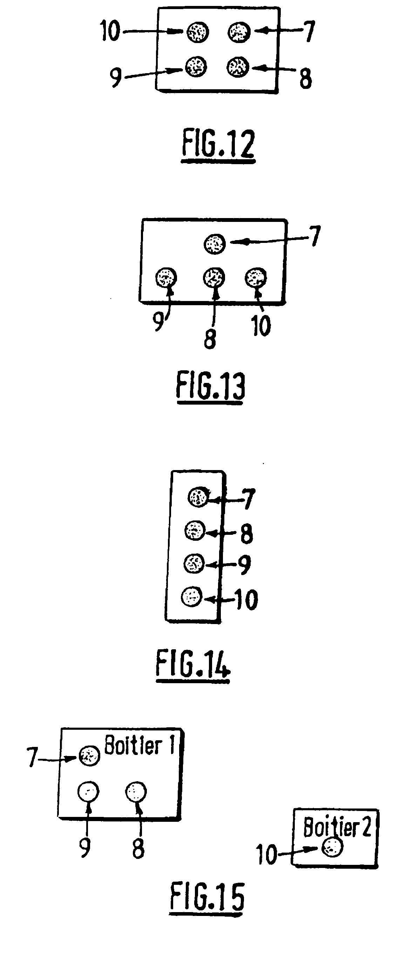

A titre d'exemple, les figures 12, 13, 14 et 15 illustrent différents modes de réalisation de l'invention. Dans les modes de réalisation représentés sur les figures 12, 13 et 14, le capteur supérieur 7, le capteur Inférieur 8, le troisième capteur 9 et le quatrième capteur 10 sont montés sur un même support. Dans le mode de réalisation représenté sur la figure 15, le capteur supérieur 7, le capteur inférieur 8 et le troisième capteur sont regroupés sur un même support alors que le quatrième capteur 10 est supporté par un autre support. Le choix entre ces différents modes de réalisation sera guidé par les possibilités d'intégration au véhicule ferroviaire.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Système de détection (2) d'un quai (4) comportant :
- un capteur supérieur (7) générant un faisceau de détection supérieur (f1) dont la limite inférieure forme la limite supérieure d'une zone A dans laquelle on souhaite vérifier la présence d'un nez de quai (5) et apte à délivrer un premier signal de détection représentatif de la présence ou de l'absence de quai (4) dans ledit faisceau de détection supérieur (f1) ;
- un capteur inférieur (8) générant un faisceau de détection inférieur (f2) dont la limite inférieure forme la limite inférieure de ladite zone A et apte à délivrer un deuxième signal de détection représentatif de la présence ou de l'absence de quai (4) dans ledit faisceau de détection inférieur (f2) ; et
- une unité de traitement du premier et du deuxième signal agencée pour émettre un signal de localisation du nez de quai (5) dans ladite zone A lorsque le premier signal est représentatif de l'absence de quai (4) et lorsque le deuxième signal est représentatif de la présence de quai (4).

2. Système selon la revendication 1, **caractérisé en ce qu'**il comporte au moins un capteur (8, 9) délivrant un signal représentatif de la distance entre ledit capteur et l'obstacle le plus proche rencontré dans son faisceau de détection.

3. Système selon la revendication 2, **caractérisé en ce que** le capteur inférieur (8) délivre un signal représentatif de la distance d2 entre ledit capteur inférieur (8)et l'obstacle le plus proche rencontré dans le faisceau de détection inférieur (f2).

4. Système selon la revendication 2, **caractérisé en ce qu'**il comporte un troisième capteur (9) générant un troisième faisceau de détection (f3) dont l'axe de propagation est sensiblement horizontal, orienté vers la zone A, et apte à délivrer un troisième signal de détection représentatif de la distance d3 entre ledit troisième capteur (9) et l'obstacle le plus proche rencontré dans le troisième faisceau de détection (f3).

5. Système selon la revendication 4, **caractérisé en ce que** l'axe de propagation du troisième faisceau de détection (f3) suit sensiblement la limite inférieure de la zone A.

6. Système selon l'une des revendications 2 à 5, **caractérisé en ce que** l'unité de traitement comporte un comparateur (14) traitant un signal représentatif d'une distance d2 ou d3 entre un capteur (8, 9) et l'obstacle le plus proche rencontré dans son faisceau de détection (f2, f3) et comparant ladite distance avec un seuil d MAX, l'unité de traitement (11) étant agencée pour émettre un signal de localisation du nez de quai dans ladite zone A lorsque ladite distance est inférieure au seuil d MAX.

7. Système selon l'une quelconque des revendications 1 à 6, **caractérisé en ce que** le capteur supérieur (7) délivre un signal représentatif de la distance d1 entre ledit capteur supérieur (7) et l'obstacle le plus proche rencontré dans le faisceau de détection supérieur (f1) et le capteur inférieur (8) délivre un signal représentatif de la distance d2 entre ledit capteur inférieur (8) et l'obstacle le plus proche rencontré dans le faisceau de détection inférieur (f2).

8. Système selon la revendication 7, **caractérisé en ce que** l'unité de traitement comporte un soustracteur (12) traitant le premier et le deuxième signal de sorte à obtenir un signal représentatif de la différence Δ entre les distances d1 et d2, un premier comparateur (13) traitant le signal représentatif de la différence Δ et comparant la différence Δ avec un seuil S, l'unité de traitement étant agencée pour valider que le premier signal est représentatif de l'absence de quai et émettre un signal de localisation du nez de quai dans ladite zone A lorsque la différence Δ est supérieure au seuil S.

9. Système selon l'une quelconque des revendications 1 à 8, **caractérisé en ce qu'**il comporte un quatrième capteur (10) générant un quatrième faisceau de détection (f4) orienté vers le bas et apte à délivrer un quatrième signal de détection représentatif de la présence ou de l'absence de quai (4) dans ledit quatrième faisceau de détection (f4).

10. Véhicule ferroviaire (6) comportant un dispositif mobile d'accès à un seuil du véhicule ferroviaire et au moins un système de détection (2) d'un quai selon l'une quelconque des revendications 1 à 9.

11. Véhicule ferroviaire selon la revendication 10, **caractérisé en ce que** le dispositif mobile d'accès comporte une unité de commande connectée audit système de détection (2) et agencée pour déployer le dispositif mobile d'accès lorsque l'unité de traitement du système de localisation émet un signal de localisation du nez de quai (5) dans ladite zone A.

12. Véhicule ferroviaire selon la revendication 11, **caractérisé en ce que** l'unité de traitement du signal délivre à l'unité de commande du dispositif mobile d'accès un signal représentatif de la distance à combler entre le véhicule ferroviaire (6) et le quai (4).

13. Procédé de détection d'un quai comportant les étapes suivantes :
- génération par un capteur supérieur (7) d'un faisceau de détection supérieur (f1) dont la limite inférieure forme la limite supérieure d'une zone A dans laquelle on souhaite vérifier la présence du nez de quai (5) ;
- délivrance d'un premier signal de détection représentatif de la présence ou de l'absence de quai (4) dans ledit faisceau de détection supérieur (f1) ;
- génération par un capteur inférieur (8) d'un faisceau de détection inférieur (f2) dont la limite inférieure forme la limite inférieure de ladite zone A ;
- délivrance d'un deuxième signal de détection représentatif de la présence ou de l'absence de quai (4) dans ledit faisceau de détection inférieur (f2) ; et
- émission d'un signal de localisation du nez de quai (5) dans ladite zone A lorsque le premier signal est représentatif de l'absence de quai (4) et lorsque le deuxième signal est représentatif de la présence de quai (4).

14. Procédé de détection d'un quai selon la revendication 13, **caractérisé en ce qu'**il comporte l'émission d'un signal de localisation du nez de quai (5) hors de ladite zone A lorsque le premier et le deuxième signal sont représentatifs de la présence d'un quai (4) ou lorsque le premier et le deuxième signal sont représentatifs de l'absence de quai (4).

15. Procédé de détection d'un quai selon la revendication 14, **caractérisé en ce qu'**il comporte une étape de délivrance d'au moins un signal de détection représentatif de la distance entre un capteur et l'obstacle le plus proche rencontré dans son faisceau de détection.

16. Procédé de détection d'un quai selon l'une des revendications 13 à 15, **caractérisé en ce qu'**il comporte une étape de comparaison de ladite distance entre un capteur et l'obstacle le plus proche rencontré dans son faisceau de détection avec un seuil d MAX.

17. Procédé de détection d'un quai selon l'une des revendications 13 à 16, **caractérisé en ce que** le premier signal de détection est représentatif de la distance d1 entre le capteur supérieur (7) et l'obstacle le plus proche rencontré dans le faisceau de détection supérieur (f1) et le deuxième signal de détection est représentatif de la distance d2 entre le capteur inférieur (8) et l'obstacle le plus proche rencontré dans le faisceau de détection inférieur (f2).

18. Procédé de détection d'un quai selon la revendication 17, **caractérisé en ce qu'**il comporte une étape de soustraction des distances d1 et d2 de sorte à obtenir un signal représentatif de la différence Δ entre les distances d1 et d2, une étape de comparaison de la différence Δ avec un seuil S et une étape d'émission d'un signal de localisation du nez de quai dans ladite zone A lorsque la différence Δ est supérieure au seuil S.
